(19) Europäisches Patentamt / European Patent Office / Office européen des brevets

(11) **EP 4 700 843 A1**

(12) **EUROPEAN PATENT APPLICATION**

(43) Date of publication:
25.02.2026 Bulletin 2026/09

(21) Application number: 25186599.4

(22) Date of filing: 01.07.2025

(51) International Patent Classification (IPC):
$H01M\ 4/131^{(2010.01)}$    $H01M\ 4/36^{(2006.01)}$
$H01M\ 4/505^{(2010.01)}$    $H01M\ 4/525^{(2010.01)}$
$H01M\ 10/0525^{(2010.01)}$    $H01M\ 10/54^{(2006.01)}$
$C01G\ 53/42^{(2025.01)}$    $C01G\ 53/50^{(2025.01)}$
$H01M\ 4/02^{(2006.01)}$

(52) Cooperative Patent Classification (CPC):
H01M 10/54; H01M 4/131; H01M 4/366;
H01M 4/505; H01M 4/525; H01M 10/0525;
C01G 53/42; C01G 53/50; H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.07.2024 JP 2024118835

(71) Applicant: Prime Planet Energy & Solutions, Inc.
Chuo-ku, Tokyo 103-0022 (JP)

(72) Inventor: HOSOE, Kento
Tokyo, 103-0022 (JP)

(74) Representative: Kuhnen & Wacker
Patent- und Rechtsanwaltsbüro PartG mbB
Prinz-Ludwig-Straße 40A
85354 Freising (DE)

(54) **MANUFACTURING METHOD OF RECYCLED POSITIVE ELECTRODE ACTIVE MATERIAL**

(57) Provided is a technique to recover a capacity of a degraded positive electrode active material and to reduce a response resistance increased by the degradation without using a means for baking. A manufacturing method disclosed herein includes polishing the positive electrode active material. The positive electrode active material includes a core particle having a layered crystal structure and includes a coating part having a rock salt crystal structure on a surface of the core particle. A ratio $(I_B/I_A)$ of a peak strength $I_A$ at 8341 eV on a nickel (Ni) - K absorption edge measured by a XAFS analysis on the positive electrode active material before the polishing and a peak strength $I_B$ at the 8341 eV on the nickel (Ni) - K absorption edge measured by the XAFS analysis on the positive electrode active material after the polishing becomes equal to or less than 0.7.

FIG.2

**Description**

BACKGROUND OF THE DISCLOSURE

1. Technical Field

A present disclosure relates to a manufacturing method of a recycled positive electrode active material.

2. Background

As an example of an electricity storage device, it is possible to think about a secondary battery, such as lithium ion secondary battery. Recently, this type of secondary battery is suitably used in a portable power supply for a personal computer, a portable terminal, or the like, a power supply for driving automobiles, such as battery electric vehicle (BEV), hybrid electric vehicle (HEV), and plug-in hybrid electric vehicle (PHEV), or the like.

A manufacturing method of a positive electrode active material disclosed by Japanese Patent Application Publication No. 2022-82205 includes a layer forming step and a heat processing step. The layer forming step is a step at which a melted lithium-containing material is sprayed to an electrode raw material and thus at which a lithium-containing material layer is formed on the electrode raw material. The heat processing step is a step at which the electrode raw material, provided with the lithium-containing material layer having been formed, is heated, at which a lithium contained in the lithium-containing material is introduced to an inside of the electrode raw material, and thus at which the positive electrode active material is obtained. This publication describes that, with the configuration described above, by introducing the lithium, sprayed to a raw material particle of the positive electrode active material, as a lithium ion sufficiently to the inside of the raw material particle, it is possible to further increase an energy density so as to enhance a battery performance and to further shorten a manufacturing time so as to further enhance a productivity.

Japanese Patent Application Publication No. 2017-79211 describes a method for manufacturing a recycled electrode active material from a battery including an electrode composition that includes a coating active material in which at least a part of a surface of the electrode active material is coated by a coating agent containing a coating resin, and that includes an electrolytic solution. This manufacturing method includes a taking-out step and a removing step. The taking-out step is a step at which the electrode composition is taken out from the battery. The removing step is a step at which the coating resin is removed from the coating active material that is contained in the electrode composition taken out from the battery. This publication describes that, with the configuration described above, it is possible, by recovering the electrode active material from the battery, to obtain a recycled electrode active material.

A lithium ion secondary battery disclosed by Japanese Patent Application Publication No. 2000-268878 includes a positive electrode and a negative electrode. The positive electrode contains a lithium nickel composite oxide having a regular array layered rock salt structure as a positive electrode active material, which is represented by a composition formula $LiNi_xM1_yM2_zO_2$ (M1 is at least 1 kind selected from Co and Mn; M2 is at least 1 kind that is selected from Al, B, Fe, Cr, and Mg; $x + y + z = 1$; $0.5 < x < 0.95$; $0.01 < y < 0.4$; $0.001 < z < 0.2$). The negative electrode contains a carbon material as a negative electrode active material, which consists of a graphite quality particle and a carbon quality particle coating at least a part of a surface of the graphite quality particle and having a graphitization not progressed. This publication describes that, by the configuration described above, it is possible to provide the lithium ion secondary battery in which a battery capacity is not reduced, whose cycle characteristic (especially, cycle characteristic under a high temperature usage environment) is superior, and whose price is cheap.

Japanese Patent Application Publication No. 2004-349210 discloses a recycling method of a positive electrode active material for lithium secondary battery. This recycling method includes a baking step and a cooling step. The baking step is a step at which the positive electrode active material for lithium secondary battery is baked at a baking temperature being equal to or more than 750°C and not more than 1000°C. The cooling step is a step at which cooling is performed from the baking temperature to a predetermined temperature at a speed being 0.2 to 2.0 °C/minute. This publication describes that, by the configuration described above, it is possible to grow a crystallite size of the positive electrode active material to a sufficient size under these conditions, and thus it is possible to dramatically reproduce a performance of the positive electrode active material.

Non-Patent Document 1 describes that, about a structural change process with movement of a transition metal ion for electrical charge and electrical discharge of a Li excess layered oxide positive electrode and an electrochemical degradation of it, a structural analysis with XDS and Cs-STEM and a first principles calculation were used and thus a study was performed. By this study, it was found that, by an electrical charge and electrical discharge cycle, Mn and Ni ion moved from a transition metal layer to a Li layer mainly on an active material particle surface layer area and thus NaCl type's MnO and NiO were generated. In this cited document, according to the study described above, it was estimated that, on an active material surface layer having an oxygen defect, the Mn and Ni ion caused irreversible movement in a transition metal layer / Li layer so as to cause a response of a structural change which generated the NaCl type's MnO and NiO.

Then, according to Non-Patent Document 1, the electrochemical degradation accompanied by an electrical discharge potential reduction caused by the electrical charge and electrical discharge cycle is assumed to be caused by the NiO and MnO generated on the active material surface.

The above described Non-Patent Document 1 is SUNBEAM Annual Report with Research Results, Part 2, Vol. 9 (2019).

SUMMARY

Conventionally, as a material that configures the positive electrode of the electricity storage device, a positive electrode active material having a layered crystal structure could be used. Regarding this, it is known that, by the electrical charge and electrical discharge cycle of the electricity storage device, for example, the layered crystal structure is changed to be a rock salt crystal structure on a surface of the positive electrode active material. Conventionally, a relationship between the change of the crystal structure on the surface of the positive electrode active material and the electrical charge and electrical discharge cycle characteristic of the electricity storage device is studied.

As described in the above patent document, regarding a means for recycling the degraded positive electrode active material, it is possible to use baking. However, the baking requires a large energy use amount and causes a high cost, and still has an improvement room for implementing both of an effect of recovering a capacity and an effect of reducing a resistance increased by the degradation. Then, the present inventor thought, without using the means for baking, to recover the capacity of the degraded positive electrode active material and to reduce the response resistance increased by the degradation.

According to a herein disclosed technique, a manufacturing method of a recycled positive electrode active material can be provided. This manufacturing method includes preparing a positive electrode active material and polishing the positive electrode active material. The positive electrode active material includes a core particle having a layered crystal structure and includes a coating part having a rock salt crystal structure on a surface of the core particle. In this manufacturing method, by the polishing, at least a part of the coating part is separated from the core particle. A ratio ($I_B/I_A$) of a peak strength $I_A$ at 8341 eV on a nickel (Ni) - K absorption edge measured by a XAFS analysis on the positive electrode active material before the polishing and a peak strength $I_B$ at the 8341 eV on the nickel (Ni) - K absorption edge measured by the XAFS analysis on the positive electrode active material after the polishing becomes equal to or less than 0.7. In accordance with such a configuration, it is possible, without using a means for baking, to recover the capacity of the degraded positive electrode active material and to reduce the response resistance increased by the degradation.

BRIEF DESCRIPTION OF THE DRAWINGS

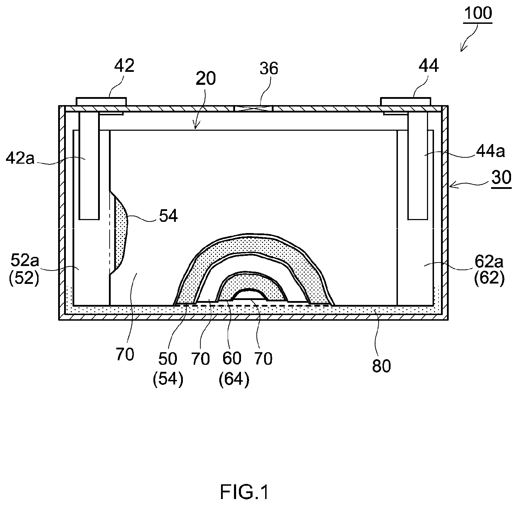

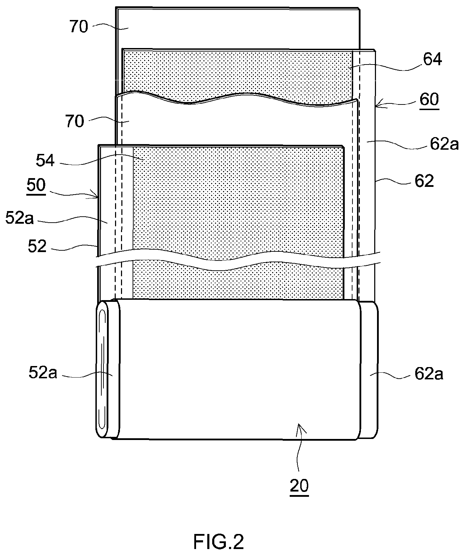

FIG. 1 is a longitudinal cross section view of a lithium ion secondary battery 100. FIG. 2 is a schematic view of an electrode assembly 20.

DESCRIPTION OF THE EMBODIMENTS

Below, one embodiment of a herein disclosed electricity storage device will be explained. The embodiment explained herein is not to particularly restrict the herein disclosed technique. The herein disclosed technique is not restricted to the embodiment explained herein, unless specifically mentioned. Drawings are schematically illustrated, and thus are not to always reflect actual things. The members/parts providing the same effect are suitably provided with the same numerals, and signs and overlapping explanations might be omitted. A wording "A to B" representing a numerical range not only means "equal to or more than A and not more than B" unless specifically mentioned, but also semantically covers a meaning of "more than A and less than B".

In the present specification, a term "electricity storage device" represents a device in which an electrical charge and an electrical discharge are generated in response to movement of a charge carrier between a pair of electrodes (a positive electrode and a negative electrode) through an electrolyte. The electricity storage device semantically covers a secondary battery, such as lithium ion secondary battery, nickel hydrogen battery, and nickel cadmium battery; and a capacitor, such as lithium ion capacitor and electric double layer capacitor. Below, an embodiment in a situation where the electricity storage device is the lithium ion secondary battery will be described.

A herein disclosed manufacturing method of a recycled positive electrode active material includes, for example, a preparing step, a first analyzing step, a polishing step, a classifying step, a second analyzing step, and an evaluating step. Incidentally, the herein disclosed manufacturing method might include an arbitrary step other than the above described steps, as needed.

The preparing step is, for example, a step at which the degraded positive electrode active material is prepared. It is good that the positive electrode active material described above is, for example, recovered from the electricity storage device that has been already used. Below, a situation where the electricity storage device, which has been already used, is a lithium ion secondary battery will be described.

FIG. 1 is a longitudinal cross section view of a lithium ion secondary battery 100. FIG. 2 is a schematic view of an electrode assembly 20. The lithium ion secondary battery 100 shown by FIG. 1 is a lithium ion secondary battery that has been already used. As shown by FIG. 1, the lithium ion secondary battery 100 includes the electrode assembly 20, a case 30, and a nonaqueous electrolytic solution 80.

As shown by FIG. 1 and FIG. 2, the electrode assembly 20 is a wound electrode assembly, in which a positive electrode 50 formed in a long sheet shape and a negative electrode 60 formed in a long sheet shape are superimposed via a separator 70 formed in a long sheet shape and then wound in a sheet longitudinal direction (below, simply referred to as "longitudinal direction", too). In the electrode assembly 20, an exposed area 52a of the positive electrode 50 and an exposed area 62a of the negative electrode 60 respectively protrude outwardly from both ends in a shorter direction orthogonal to the longitudinal direction.

As shown by FIG. 1 and FIG. 2, the positive electrode 50 includes a positive electrode current collector 52 formed in a long sheet shape and includes a positive electrode active material layer 54. The positive electrode current collector 52 is, for example, an aluminum foil. In this embodiment, the positive electrode current collector 52 includes an area in which the positive electrode active material layer 54 is provided, and includes the exposed area 52a in which the positive electrode active material layer 54 is not provided and thus a surface of the positive electrode current collector 52 is exposed. The positive electrode active material layer 54 is, for example, provided on one surface or both surfaces (here, on both surfaces) of the positive electrode current collector 52 along the longitudinal direction in a long sheet shape. The positive electrode active material layer 54 is not provided at an end part (in the drawings, an end part at a left side) in a sheet shorter direction (below, simply referred to as "shorter direction", too). The exposed area 52a herein is a long sheet area at the end part in the shorter direction (in the drawings, the end part at the left side). As shown by FIG. 1, on the exposed area 52a, a current collector plate 42a is attached.

The positive electrode active material layer 54 contains, for example, a positive electrode active material. In this embodiment, the positive electrode active material includes a core particle, and a coating part being on a surface of the core particle. The core particle herein has a layered crystal structure. It is good that the core particle is, for example, a lithium composite oxide. Although not particularly restricted, in consideration that a later described polishing step is performed, from a perspective of stability, it is preferable that the core particle is a single particle.

Regarding the lithium composite oxide, it is preferable to use a lithium-transition metal complex oxide which contains at least Ni, as a transition metal element. As the lithium-transition metal complex oxide, it is possible to use, for example, a lithium-nickel base composite oxide, a lithium-nickel-manganese base composite oxide, a lithium-nickel-cobalt-manganese base composite oxide, a lithium-nickel-cobalt-aluminum base composite oxide, a lithium-iron-nickel-manganese base composite oxide, or the like. The core particle might be configured with 1 kind or might be configured with combination of 2 or more kinds.

Incidentally, "lithium-nickel-cobalt-manganese base composite oxide" in the present specification is a term that semantically covers not only an oxide whose constituent elements are Li, Ni, Co, Mn, and O, but also an oxide containing 1 kind or 2 or more kinds of additive elements other than them. As the additive elements, it is possible to select, for example, a transition metal element, a typical metal element, or the like, such as Mg, Ca, Al, Ti, V, Cr, Y, Zr, Nb, Mo, Hf, Ta, W, Na, Fe, Zn, and Sn. The additive element might be a semimetal element, such as B, C, Si, and P, or a non-metal element, such as S, F, Cl, Br, and I. This can be similarly said to the lithium-nickel base composite oxide, the lithium-nickel-manganese base composite oxide, the lithium-nickel-cobalt-aluminum base composite oxide, the lithium-iron-nickel-manganese base composite oxide, and the like.

As the core particle, for example, $LiNi_{0.33}Co_{0.33}Mn_{0.33}O_2$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, or the like, can be preferably used.

The coating part has, for example, a rock salt crystal structure. The coating part having the rock salt crystal structure could semantically cover, for example, one that is generated by movement of the transition metal of the core particle from a transition metal site to a lithium site in response to the electrical charge and electrical discharge of the lithium ion secondary battery 100. Thus, a presence of the coating part having the rock salt crystal structure in the positive electrode active material means the degradation on the positive electrode active material. Although not particularly restricted, the coating part contains, for example, a nickel oxide (NiO) or a manganese oxide (MnO).

A mean particle diameter of the positive electrode active material is approximately 0.5 $\mu$m to 20 $\mu$m. The mean particle diameter of the positive electrode active material is, for example, equal to or more than 1 $\mu$m, preferably equal to or more than 3 $\mu$m, or further preferably equal to or more than 5 $\mu$m. The mean particle diameter of the positive electrode active material is, for example, equal to or less than 15 $\mu$m, preferably equal to or less than 12 $\mu$m, or further preferably equal to or less than 10 $\mu$m. The mean particle diameter of the positive electrode active material herein means a mean particle diameter of the positive electrode active material including the core particle and the coating part. Incidentally, in the present specification, the wording "mean particle diameter" of the particle means a particle diameter (a $D_{50}$ particle diameter) corresponding to an accumulation 50% from a fine particle side, regarding a particle size distribution on a volume basis measured by a particle size distribution measurement based on a laser-diffraction/light-scattering method.

The positive electrode active material layer 54 might contain not only the positive electrode active material, but also an electrically conducting material, a binder, or the like. As the electrically conducting material, it is possible to use, for example, a carbon black, such as acetylene black (AB); or the other carbon material, such as graphite. As the binder, it is possible to use, for example, polyvinylidene fluoride (PVDF), or the like. A content amount of the positive electrode active material with respect to the whole of the positive electrode active material layer 54 is, for example, preferably equal to or more than 70 mass%, or further preferably 85 mass% to 95 mass%. A content amount of the electrically conducting material with respect to the whole of the positive electrode active material layer 54 is, for example, 0.1 mass% to 20 mass%. A content amount of the binder with respect to the whole of the positive electrode active material layer 54 is, for example, 0.5 mass% to 15 mass%. Incidentally, in the present specification, a wording "positive electrode mixture agent" means the whole of materials that configure the positive electrode active material layer 54.

As shown by FIG. 1 and FIG. 2, the negative electrode 60 includes a negative electrode current collector 62 formed in a long sheet and includes a negative electrode active material layer 64. The negative electrode current collector 62 is, for example, a copper foil. In this embodiment, the negative electrode current collector 62 includes an area on which the negative electrode active material layer 64 is provided and includes the exposed area 62a on which the negative electrode active material layer 64 is not provided and thus a surface of the negative electrode active material layer 64 is exposed. The negative electrode active material layer 64 is, for example, provided on one surface or both surfaces (here, on both surfaces) of the negative electrode current collector 62 along the longitudinal direction in a long sheet shape. The negative electrode active material layer 64 is not provided at an end part (in the drawings, an end part positioned at a right side) in the shorter direction. The exposed area 62a herein is a long sheet area at the end part (in the drawings, the end part positioned at the right side) in the shorter direction. As shown by FIG. 1, on the exposed area 62a, a current collector plate 44a is attached.

The negative electrode active material layer 64 contains, for example, a negative electrode active material. As the negative electrode active material, a conventionally known negative electrode active material that is used for this kind of purpose can be used, without particular restriction. It is good that the negative electrode active material is, for example, a carbon material, such as graphite, hard carbon, and soft carbon; silicon (Si); or the like. The content amount of the negative electrode active material with respect to the whole of the negative electrode active material layer 64 is, for example, preferably equal to or more than 70 mass%, or further preferably 85 mass% to 98 mass%.

The negative electrode active material layer 64 might contain a binder, a thickening agent, or the like, besides the negative electrode active material. As the binder, for example, it is possible to use styrene butadiene rubber (SBR), or the like. A content amount of the binder with respect to the whole of the negative electrode active material layer 64 is, which is not particularly restricted, for example, 0.1 mass% to 8 mass%. As the thickening agent, for example, carboxymethyl cellulose (CMC), or the like, can be preferably used. A content amount of the thickening agent with respect to the whole of the negative electrode active material layer 64 is, which is not particularly restricted, for example, 0.3 mass% to 3 mass%.

As the separator 70, it is possible to use, for example, a porous sheet (a film) made from a resin material, such as polyethylene (PE), polypropylene (PP), polyester, cellulose, and polyamide. The porous sheet might be configured with a single layer structure, or might be configured with a laminate structure consisting of two or more layers (for example, a three layers structure in which PP layers are laminated on both surfaces of a PE layer). On a surface of the separator 70, a heat resistance layer (HRL) might be provided.

The case 30 is, for example, an outer container that is configured to accommodate the electrode assembly 20 and the nonaqueous electrolytic solution 80. The case 30 herein is a flat case formed in a square shape. As shown by FIG. 1, the case 30 includes a positive electrode terminal 42, a negative electrode terminal 44, a safe valve 36, and a liquid injection hole (not shown in drawings). The positive electrode terminal 42 is, for example, a terminal for outside connection at a positive electrode side. The positive electrode terminal 42 herein is electrically connected to the positive electrode 50 of the electrode assembly 20 via the current collector plate 42a. The negative electrode terminal 44 is, for example, a terminal for outside connection at a negative electrode side. The negative electrode terminal 44 herein is electrically connected to the negative electrode 60 of the electrode assembly 20 via the current collector plate 44a. The safe valve 36 is, for example, a thin-walled part that is set to release an internal pressure of the case 30 when the internal pressure is increased to a level equal to or more than a predetermined level. The liquid injection hole is, for example, a portion that is configured to inject the nonaqueous electrolytic solution 80 into the case 30.

The nonaqueous electrolytic solution 80 contains, for example, a nonaqueous solvent and a supporting salt. As the nonaqueous solvent, it is possible to use various organic solvents, such as carbonates, ethers, esters, nitriles, sulfones, and lactones, which are used for this kind of purpose. Among them, carbonates can be preferably used. As the carbonates, it is possible to use, for example, ethylene carbonate (EC), propylene carbonate (PC), diethyl carbonate (DEC), dimethyl carbonate (DMC), ethyl methyl carbonate (EMC), fluoro ethylene carbonate (FEC) (preferably, monofluoroethylene carbonate), monofluoromethyl difluoromethyl carbonate (F-DMC), trifluoro dimethyl carbonate (TFDMC), or the like. As the nonaqueous solvent, 1 kind of nonaqueous solvent might be used alone, or 2 or more kinds of nonaqueous solvents might be mixed and then used. As the supporting salt, for example, it is possible to use a lithium salt, such as $LiPF_6$, $LiBF_4$, and $LiClO_4$. It is good that a concentration of the supporting salt is, for example, 0.7 mol/L to 1.4 mol/L. The nonaqueous electrolytic solution 80 might contain an additive agent, which is used for this kind of purpose, as needed. As the additive agent, it is possible to contain, for example, a coating layer forming agent, such as $LiB(C_2O_4)_2$ (LiBOB) and $LiBF_2(C_2O_4)$; a gas generating agent, such as biphenyl (BP) and cyclohexyl benzene (CHB); a thickening agent; or the like.

At the preparing step, in this embodiment, firstly, the degraded electricity storage device (here, the lithium ion secondary battery 100) is disassembled, the electrode assembly 20 is taken out from an inside of the case 30, and further the positive electrode 50 is taken out. Next, it is good that, by scraping the positive electrode active material layer 54 off the positive electrode current collector 52 of the positive electrode 50, the positive electrode mixture agent containing the positive electrode active material is obtained.

Although not particularly restricted, from a perspective of suppressing the degradation from being accelerated, it is preferable that the preparing step is performed in an inert atmosphere and a dry atmosphere. For example, it is good that, from disassembling the lithium ion secondary battery 100 to obtaining the positive electrode mixture agent, the operations are performed in a glove box which satisfies the inert atmosphere and the dry atmosphere.

The first analyzing step is a step, for example, at which an X-ray absorption fine structure (XAFS) analysis for the positive electrode active material having been prepared is performed. By performing the first analyzing step, it is possible, for example, to analyze a degree of the coating part formation, a composition of the coating part, or the like. **In** this embodiment, at the first analyzing step, a peak strength $I_A$ at 8341 eV on a nickel (Ni) - absorption edge, measured by the XAFS analysis on the positive electrode active material obtained at the preparing step, is measured.

A presence of the peak at the 8341 eV on the nickel (Ni) - absorption edge means, for example, that a nickel (Ni) ion in the positive electrode active material has moved from the transition metal site to the lithium site by the electrical charge and electrical discharge of the lithium ion secondary battery 100 and has become in a divalent state ($Ni^{2+}$). This means that the nickel (Ni) ion moves to the lithium site at the electrically charging time of the lithium ion secondary battery 100 then a charge state changes to be divalent, and additionally that it cannot return to the transition metal site at the electrically discharging time. Due to the presence of the peak at 8341 eV, it can be understood that the coating part containing a nickel chemical compound (for example, NiO) having the rock salt crystal structure is present on a part of a surface of the positive electrode active material. Then, in the nickel chemical compound having the rock salt crystal structure, insertion/removal of the lithium is caused at a potential lower than the positive electrode active material having the layered crystal structure, and thus it makes the electrical discharge potential be reduced and causes the degradation. Thus, it is possible to treat the presence of the peak at the 8341 eV on the nickel (Ni) - absorption edge as one indicator for the degradation of the lithium ion secondary battery 100.

In this embodiment, it is good that the XAFS analysis by a transmission method is performed. The positive electrode active material subjected to the XAFS analysis at the first analyzing step might be, from a perspective of further easily performing the analysis, the positive electrode mixture agent obtained at the preparing step. As an apparatus used at the present step and the second analyzing step, a commercially available measuring apparatus can be used without particular restriction. As a measuring apparatus, it is possible to use, for example, "QuantumLeap V210" made by Canon Inc. To analyze obtained data, for example, it is possible to preferably use an analyzing software "Athena".

The polishing step is, for example, a step at which the positive electrode active material is polished. By performing the polishing step, for example, it is possible to separate the coating part from the core particle. In this embodiment, by putting the positive electrode mixture agent, obtained at the preparing step, into a container including a polishing material, and by rotating this container, the positive electrode active material is polished. It is good that the polishing material (for example, an alumina abrasive) is, for example, applied to coat an inner wall of the container. Rotating the container is not particularly restricted, but it is good to include both of rotation and revolution. It is good that each of a number of the rotation and a number of the revolution is set to be approximately 500 rpm to 3000 rpm (preferably, 1000 rpm to 2500 rpm). A polishing time is, for example, 10 minutes to 120 minutes, and is preferably set to be 30 minutes to 60 minutes. In order to perform the polishing step, for example, a commercially available rotating/revoluting mixer can be preferably used. As the commercially available rotating/revoluting mixer, it is possible to use, for example, "Planetary centrifugal vacuum mixer" of THINKY CORPORATION.

It is preferable, for example, from a perspective of not only efficiently separating the coating part but also suppressing an occurrence of an unnecessary chemical response during the polishing, that the polishing step is performed in the inert atmosphere and the dry atmosphere.

The classifying step is, for example, a step at which the positive electrode active material after the polishing is classified. By performing the classifying step, it is possible, for example, to remove the coating part separated by the polishing, a microscopic fragment caused by the polishing, or the like, and to obtain a particle having an appropriate size. In this embodiment, at the classifying step, a particle group is obtained whose particle size distribution is the same as the positive electrode active material before the polishing. Thus, at the classifying step, it is good to obtain the particle group whose mean particle diameter is approximately 0.5 $\mu$m to 20 $\mu$m. The mean particle diameter of the particle group obtained at the classifying step is, for example, equal to or more than 1 $\mu$m, preferably equal to or more than 3 $\mu$m, or further preferably equal to or more than 5 $\mu$m. The mean particle diameter of the particle group obtained at the classifying step is, for example, equal to or less than 15 $\mu$m, preferably equal to or less than 12 $\mu$m, or further preferably equal to or less than 10 $\mu$m.

The second analyzing step is, for example, a step at which the XAFS analysis for the positive electrode active material after the polishing step is performed. By performing the second analyzing step, it is possible, for example, to analyze a degree of the coating part remaining on a core particle surface, a composition of the remaining coating part, or the like. In this embodiment, at the second analyzing step, the peak strength $I_B$ at the 8341 eV on the nickel (Ni) - absorption edge, which is measured by the XAFS analysis on the positive electrode active material after the polishing step, is measured.

The evaluating step is, for example, a step at which, based on a result obtained at the first analyzing step and a result obtained at the second analyzing step, whether it can be used as the recycled positive electrode active material is evaluated. In this embodiment, at the evaluating step, when a ratio ($I_B/I_A$) of the peak strength $I_A$ and the peak strength $I_B$ is equal to or less than 0.7, it is evaluated as "good quality product" and then it is evaluated that it can be used as the recycled positive electrode active material. In this situation, the positive electrode active material can be used, for example, as the positive electrode active material for manufacturing a new lithium ion secondary battery. When the ratio ($I_B/I_A$) is more than 0.7, it is evaluated as "defective product" and then it is evaluated that it cannot be used as the recycled positive electrode active material. In this situation, it is good that, on the positive electrode active material, for example, the above described polishing process is performed, again.

From a perspective of further properly implement the battery performance of the battery used as the recycled positive electrode active material, the ratio ($I_B/I_A$) is preferably equal to or less than 0.65, further preferably equal to or less than 0.6, or furthermore preferably equal to or less than 0.55, and thus it is better as the ratio becomes smaller. Although not particularly restricted, the ratio ($I_B/I_A$) is approximately equal to or more than 0.05, for example, is equal to or more than 0.1, or might be equal to or more than 0.2 or equal to or more than 0.3.

The recycled positive electrode active material manufactured by the herein disclosed manufacturing method can be used, for example, to manufacture the lithium ion secondary battery for various purposes. As a suitable purpose, it is possible to select a power supply for driving which is mounted on a vehicle, such as battery electric vehicle (BEV), hybrid electric vehicle (HEV), and plug-in hybrid electric vehicle (PHEV). The lithium ion secondary battery can be used, for example, as a storage battery of a small electric power storage apparatus, or the like. The lithium ion secondary battery can be used, for example, in a form of a battery pack configured by connecting the lithium ion secondary batteries in series and/or in parallel.

The herein disclosed manufacturing method of the recycled positive electrode active material includes preparing the positive electrode active material and polishing the positive electrode active material. The positive electrode active material includes the core particle having the layered crystal structure, and includes the coating part having the rock salt crystal structure on the surface of the core particle. In this manufacturing method, by polishing, at least a part of the coating part is separated from the core particle. The ratio ($I_B/I_A$) of the peak strength $I_A$ at 8341 eV on a nickel (Ni) - K absorption edge, measured by the XAFS analysis on the positive electrode active material after the polishing, and the peak strength $I_B$ at the 8341 eV on the nickel (Ni) - K absorption edge, which is measured by the XAFS analysis on the positive electrode active material after the polishing becomes equal to or less than 0.7.

The positive electrode active material prepared by this manufacturing method is the positive electrode active material that includes the core particle having the layered crystal structure and the coating part having the rock salt crystal structure on the surface of the core particle. As described above, the coating part of the positive electrode active material is, for example, formed by the electrical charge and electrical discharge cycle of the lithium ion secondary battery 100, and could cause the degradation of the positive electrode active material. In this manufacturing method, by including the polishing process on the positive electrode active material including the coating part, it is possible to separate the coating part of the positive electrode active material. The degree of the coating part separated from the positive electrode active material by the polishing is evaluated with the XAFS analysis on the positive electrode active materials before and after the polishing. Regarding the evaluation with the XAFS analysis, a product whose ratio ($I_B/I_A$) of the peak strength $I_A$ at 8341 eV on a nickel (Ni) - K absorption edge for the positive electrode active material before the polishing and the peak strength $I_B$ at the 8341 eV on the nickel (Ni) - K absorption edge for the active material after the polishing is equal to or less than 0.7 is evaluated as the good quality product. In other words, according to the herein disclosed manufacturing method, it is possible, by polishing the positive electrode active material and by evaluating the degree of the coating part separated from the positive electrode active material due to the polishing, to manufacture the recycled positive electrode active material. Thus, by the herein disclosed manufacturing method, it is possible, without using the means for baking, to recover the capacity of the degraded positive electrode active material and to reduce a response resistance increased by the degradation.

In the herein disclosed manufacturing method, at the polishing, the positive electrode active material might be polished in the dry atmosphere. By this, it is possible to suppress the removal of the lithium ion from the core particle caused by inclusion of moisture.

The herein disclosed manufacturing method might include performing the XAFS analysis on the positive electrode active material before the polishing and after the polishing. By performing the XAFS analysis on the positive electrode active material before and after the polishing, it is possible to manufacture the recycled positive electrode active material that has the high reliability for recovering the capacity and for reducing the response resistance increased by the degradation.

The herein disclosed manufacturing method might include classifying the positive electrode active material after the polishing. By classifying the positive electrode active material after the polishing, it is possible to selectively obtain a particle group having an appropriate particle diameter, from a mix state with a particle group having an appropriate particle diameter, a coating part piece separated by the polishing, and the like.

In the herein disclosed manufacturing method, it is good by the classifying to obtain the positive electrode active material whose mean particle diameter is 5 $\mu$m to 10 $\mu$m. By this, it is possible to obtain the particle group whose particle size distribution is preferable as the positive electrode active material used for the electricity storage device.

In the herein disclosed manufacturing method, the positive electrode active material might be the lithium-transition metal complex oxide. By this, it is possible to provide a preferable recycling method of the positive electrode active material which is the lithium-transition metal complex oxide.

Below, a test example related to the herein disclosed technique will be explained, but it is not intended to restrict the herein disclosed technique into the below-described test example.

[Degradation of positive electrode active material]

As for a raw material, $LiNi_{1/3}Co_{1/3}Mn_{1/3}O_2$ (LNCM) (mean particle diameter: 8 $\mu$m) being a single particle as the positive electrode active material, the acetylene black (AB) as the electrically conducting material, and polyvinylidene fluoride (PVdF) as the binder were prepared. These were mixed with N-methylpyrrolidone (NMP) being as the solvent to satisfy a mass ratio being LNCM : AB : PVdF = 90 : 8 : 2, so as to manufacture the positive electrode paste. The positive electrode paste was applied to coat both surfaces of a long aluminum foil in a long sheet shape, dried, and then pressed, so that the positive electrode sheet was obtained.

The graphite as the negative electrode active material, the styrene butadiene rubber (SBR) as the binder, and the carboxymethyl cellulose (CMC) as the thickening agent were prepared. These were mixed with a water as the solvent to satisfy a mass ratio being graphite : SBR : CMC = 98 : 1 : 1, so as to manufacture the negative electrode paste. The negative electrode paste was applied to coat both surfaces of a long copper foil in a long sheet shape, dried, and then pressed, so that the negative electrode sheet was obtained.

As the separator, a separator sheet was prepared in which the HRL was provided on a porous polyolefin sheet configured with a three layers structure of PP/PE/PP. The positive electrode sheet, the negative electrode sheet, and two separator sheets were laminated, wound, and then pressed from a side surface direction to be deformed, so that the wound electrode assembly formed in a flat shape was manufactured.

Next, the positive electrode terminal and the negative electrode terminal were connected to the wound electrode assembly, and then the resultant was accommodated in a square-shaped case including a liquid injection hole for the electrolytic solution. Then, the nonaqueous electrolytic solution was injected from the liquid injection hole, and the liquid injection hole was sealed airtightly. Incidentally, as for the nonaqueous electrolytic solution, a solution was prepared in which the $LiPF_6$ being as the supporting salt was dissolved at a concentration being 1.1 mol /L into a mix solvent containing the ethylene carbonate (EC), the dimethyl carbonate (DMC), and the ethyl methyl carbonate (EMC) at a volume ratio being EC : DMC : EMC = 3 : 3 : 4 as the nonaqueous solvents. Then, an aging process was performed, and then the resultant was treated as the lithium ion secondary battery in an usable state.

The lithium ion secondary battery was kept under 40°C environment. The lithium ion secondary battery was subjected to a constant current (CC) charge at 1 C current value till 4.3 V, and then subjected to a CC discharge at 1 C current value till 3.0 V, so that the lithium ion secondary battery was degraded. Incidentally, regarding the degradation described above, the electrical charge and electrical discharge cycle was performed to be 400 cycles when the above described electrical charge and electrical discharge was treated as 1 cycle.

The degraded lithium ion secondary battery was electrically discharged till the voltage became 2 V. Then, the lithium ion secondary battery was disassembled, the positive electrode sheet was taken out, further the positive electrode sheet was crushed, the positive electrode mixture agent was collected and further passed through a sieve whose mesh was 500 $\mu$m, and then the sieved powder was prepared.

[Polishing and classifying positive electrode active material] <Practical example 1 to Practical example 4, Comparative example 2, and Comparative example 3>

Next, polishing the powder was performed. For polishing the powder, the rotating/revolving mixer ("Planetary centrifugal vacuum mixer" made by THINKY CORPORATION) was used. The powder was put into a container whose inner wall was coated with a polishing material made of alumina (particle size 80 (3.6 $\mu$m to 18 $\mu$m)), the container was set to a holder which was inclined by 45°C with respect to a revolution axis, and then the polishing was performed. A revolution speed of the mixer was 1500 rpm. A rotation number of the container was 1500 rpm. A polishing time was set to be 30 minutes to 60 minutes. An atmosphere of the polishing was a nitrogen atmosphere and the dry atmosphere. Then, the powder after the polishing was classified, so that a particle group whose mean particle diameter was 8 μm was obtained.

<Comparative example 1>

The positive electrode mixture agent obtained by crushing the positive electrode sheet was classified, so that the particle group whose mean particle diameter was 8 μm was obtained. This was treated as Comparative example 1.

<Reference example>

The positive electrode active material as the raw material was prepared to be as Reference example.
Regarding the powder of each example after the classifying and Reference example, the above described measuring apparatus was used and thus a mean particle diameter D2 was measured. Then, reduction degree (μm) of the mean particle diameters before the polishing and after the polishing was obtained with a below described formula (X):

Reduction degree (μm) = (Mean particle diameter D1 before the polishing) - (Mean particle diameter D2 after the polishing)  (X)

A result is shown in an applicable column of Table 1. Incidentally, here, a mean particle diameter of Comparative example 1 was treated as the mean particle diameter D1.

[XAFS analysis]

Regarding the powder of each example after the classifying and Reference example, the XAFS analysis by the transmission method was performed. The XAFS analysis was performed according to a manual of the measuring apparatus "QuantumLeap V210" (made by Canon Inc.) used for this analysis. In the XAFS analysis, an incident energy was set for each of a manganese (Mn) - K absorption edge, a cobalt (Co) - K absorption edge, and a nickel (Ni) - K absorption edge, and then a transmission degree (transmission XAFS) of each energy was measured. A kind of an X-ray used for the measurement was a hard X-ray. At the same time, diffraction strengths on a (003) surface and a (104) surface of a space group R-3m were simultaneously obtained. Based on the obtained diffraction strengths, an anomalous dispersion term f"\ (eu/site) was obtained, and a XAFS spectrum corresponding to the anomalous dispersion term f" was extracted. Next, the peak strength at 8341 eV on the nickel (Ni) - absorption edge was obtained. For extracting the XAFS spectrum, an analyzing software "Athena" widely used for the XAFS analysis was used. Then, the ratio ($I_B/I_A$) of the peak strength $I_A$ of Comparative example 1 and the peak strength $I_B$ of the other example was calculated. A result is shown in an applicable column of Table 1.

[Evaluation of capacity maintenance rate]

The powder bodies after the classifying of Practical example 1 to Practical example 4 and Comparative example 1 to Comparative example 3 were used, and then 7 kinds of test secondary batteries were manufactured with the above described material and procedure. Further, the positive electrode active material was used as the raw material, and then the test secondary battery of Reference example was manufactured with the above described material and procedure. Here, the manufactured 8 kinds of test secondary batteries were kept under 25°C environment. The test secondary battery was subjected to a CCCV electrical charge (cut-off current: 0.01 C) at 0.1 C current value till 4.3 V. Then, the test secondary battery was subjected to a CCCV electrical discharge (cut-off current: 0.01 C) from 4.3 V to 3.0 V. A capacity of each test secondary battery at the time of performing the electrical charge and electrical discharge, in which this CCCV electrical charge plus this CCCV electrical discharge was treated as 1 cycle, was measured. Then, the capacity of the test secondary battery of each example, in a situation where the capacity of the test secondary battery of Reference example was treated as 100%, was calculated. A result is shown in an applicable column of Table 1.
The test secondary battery was kept under a temperature environment being -10°C, and then electrically charged until an SOC of the positive electrode became 50%. Next, an impedance measurement was performed at a condition of amplitude: 5 mV, and measurement frequency range: 0.01 Hz to 10000 Hz, the obtained result was used to make a Cole-Cole plot, and then a diameter of a semicircle was treated as a resistance value. A resistance of the test secondary battery of each example, in a situation where the resistance value of the test secondary battery of Reference example was treated as 100%, was calculated. A result is shown in an applicable column of Table 1.

[Table 1]

Table 1

|  | Reduction degree (μm) | Peak strength ratio ($I_B/I_A$) | Capacity maintenance rate (%) | Response resistance (%) |
|---|---|---|---|---|
| Practical example 1 | 0.4 | 0.64 | 96 | 112 |
| Practical example 2 | 0.6 | 0.55 | 96 | 109 |
| Practical example 3 | 0.8 | 0.54 | 97 | 107 |
| Practical example 4 | 1 | 0.52 | 95 | 102 |
| Comparative example 1 | - | 1 | 81 | 143 |
| Comparative example 2 | 0.1 | 0.95 | 83 | 141 |
| Comparative example 3 | 0.2 | 0.93 | 82 | 138 |
| Reference example | - | 0.45 | 100 | 100 |

The manufacturing method performed in the present test example included preparing the positive electrode active material and polishing the positive electrode active material. The positive electrode active material included the core particle having the layered crystal structure and included the coating part having the rock salt crystal structure on the surface of the core particle. By polishing, at least a part of the coating part was separated from the core particle. Then, as shown in Table 1, regarding the test secondary batteries manufactured with the positive electrode active materials of Practical example 1 to Practical example 4 in which the ratio ($I_B/I_A$) of the peak strength $I_A$ at 8341 eV on a nickel (Ni) - K absorption edge measured by the XAFS analysis on the positive electrode active material before the polishing and the peak strength $I_B$ at the 8341 eV on the nickel (Ni) - K absorption edge measured by the XAFS analysis on the positive electrode active material after the polishing was equal to or less than 0.7, a capacity maintenance rate was recovered and the response resistance increased by the degradation was reduced.

The herein disclosed technique can include techniques recited in items described below.

Item 1: A manufacturing method of a recycled positive electrode active material, comprising:

preparing a positive electrode active material that comprises a core particle having a layered crystal structure, and that comprises a coating part having a rock salt crystal structure on a surface of the core particle; and
polishing the positive electrode active material, wherein
at least a part of the coating part is separated from the core particle by the polishing, and
a ratio ($I_B/I_A$) of a peak strength $I_A$ at 8341 eV on a nickel (Ni) - K absorption edge measured by an X-ray absorption fine structure analysis on the positive electrode active material before the polishing and a peak strength $I_B$ at the 8341 eV on the nickel (Ni) - K absorption edge measured by the X-ray absorption fine structure analysis on the positive electrode active material after the polishing becomes equal to or less than 0.7.

Item 2: The manufacturing method recited in Item 1, wherein
at the polishing, the positive electrode active material is polished in a dry atmosphere.

Item 3: The manufacturing method recited in Item 1 or 2, comprising:
performing the X-ray absorption fine structure analysis on the positive electrode active material before the polishing and after the polishing.

Item 4: The manufacturing method recited in any one of Items 1 to 3, comprising:
classifying the positive electrode active material after the polishing.

Item 5: The manufacturing method recited in Item 4, wherein
by the classifying, the positive electrode active material whose mean particle diameter is equal to or more than 5 μm and not more than 10 μm is obtained.

Item 6: The manufacturing method according to any one of Items 1 to 5, wherein
the positive electrode active material is a lithium-transition metal complex oxide.

Above, the embodiments of the herein disclosed technique has been explained, but these are merely illustrations, and are not to restrict the scope of claims. The technique recited in claims contains matters in which the above-illustrated specific example is variously deformed or changed.

**Claims**

1. A manufacturing method of a recycled positive electrode active material, comprising:

   preparing a positive electrode active material that comprises a core particle having a layered crystal structure, and a coating part having a rock salt crystal structure on a surface of the core particle; and
   polishing the positive electrode active material,
   wherein
   at least a part of the coating part is separated from the core particle by the polishing, and
   a ratio ($I_B/I_A$) of a peak strength $I_A$ at 8341 eV on a nickel (Ni) - K absorption edge measured by an X-ray absorption fine structure analysis on the positive electrode active material before the polishing and a peak strength $I_B$ at the 8341 eV on the nickel (Ni) - K absorption edge measured by the X-ray absorption fine structure analysis on the positive electrode active material after the polishing becomes equal to or less than 0.7.

2. The manufacturing method according to claim 1, wherein
   at the polishing, the positive electrode active material is polished in a dry atmosphere.

3. The manufacturing method according to claim 1, further comprising:
   performing the X-ray absorption fine structure analysis on the positive electrode active material before the polishing and after the polishing.

4. The manufacturing method according to any one of claims 1 to 3, further comprising:
   classifying the positive electrode active material after the polishing.

5. The manufacturing method according to claim 4, wherein
   by the classifying, the positive electrode active material whose mean particle diameter is equal to or more than 5 $\mu$m and not more than 10 $\mu$m is obtained.

6. The manufacturing method according to claim 1, wherein
   the positive electrode active material is a lithium-transition metal complex oxide.

100

42    20    36    44

42a    44a

30

54

52a                      62a
(52)                     (62)

70    50    70  60  70    80
      (54)    (64)

FIG.1

FIG.2

Europäisches Patentamt
European Patent Office
Office européen des brevets

## EUROPEAN SEARCH REPORT

**Application Number**

EP 25 18 6599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/226647 A1 (TSUJIKO AKIRA [JP]) 9 August 2018 (2018-08-09) * page 2, paragraph 0019 - page 6, paragraph 0093; figures 1-4; table 1 * | 1-6 | INV. H01M4/131 H01M4/36 H01M4/505 H01M4/525 |
| X | US 2012/009474 A1 (YANAGIHARA ASUKI [JP] ET AL) 12 January 2012 (2012-01-12) * page 1, paragraph 0011 - page 18, paragraph 0243; figure 7B; tables 1,2 * | 1-6 | H01M10/0525 H01M10/54 ADD. C01G53/42 |
| X | JOHNSON C S ET AL: "STRUCTURAL CHARACTERIZATION OF LAYERED LIXNI0.5MN0.5O2 (0 X 2) OXIDE ELECTRODES FOR LI BATTERIES", CHEMISTRY OF MATERIALS, AMERICAN CHEMICAL SOCIETY, US, vol. 15, no. 12, 17 June 2003 (2003-06-17) , pages 2313-2322, XP001233331, ISSN: 0897-4756, DOI: 10.1021/CM0204728 * page 2313, paragraph Introduction - page 2322, paragraph Conclusion; figures 6a,b; tables 1-3 * | 1-6 | C01G53/50 H01M4/02 |
| T | DONGLI ZENG ET AL: "Investigation of the Structural Changes in Li[Ni $y$ Mn $y$ Co (1-2 $y$ )]O 2 ( $y$ = 0.05) upon Electrochemical Lithium Deintercalation +", CHEMISTRY OF MATERIALS, vol. 22, no. 3, 9 February 2010 (2010-02-09), pages 1209-1219, XP055305953, US ISSN: 0897-4756, DOI: 10.1021/cm902721w * the whole document * | 1-6 | |

**TECHNICAL FIELDS SEARCHED (IPC)**

H01M
C01G

The present search report has been drawn up for all claims

| Place of search | Date of completion of the search | Examiner |
|---|---|---|
| Munich | 17 December 2025 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                      

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6599

This annex lists the patent family members relating to the patent documents cited in  the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| US 2018226647 | A1 | 09-08-2018 | CN | 108408784 A | 17-08-2018 |
| | | | JP | 2018129228 A | 16-08-2018 |
| | | | KR | 20180092852 A | 20-08-2018 |
| | | | US | 2018226647 A1 | 09-08-2018 |
| US 2012009474 | A1 | 12-01-2012 | CN | 102315447 A | 11-01-2012 |
| | | | JP | 5549437 B2 | 16-07-2014 |
| | | | JP | 2012018827 A | 26-01-2012 |
| | | | US | 2012009474 A1 | 12-01-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022082205 A
- JP 2017079211 A
- JP 2000268878 A
- JP 2004349210 A

**Non-patent literature cited in the description**

- *SUNBEAM Annual Report with Research Results*, 2019, vol. 9